# EUROPÄISCHE PATENTSCHRIFT

(11) **EP 1 552 898 B1**
(45) Veröffentlichungstag und Bekanntmachung des Hinweises auf die Patenterteilung: **24.10.2012**
(21) Anmeldenummer: 04029652.7
(22) Anmeldetag: 15.12.2004
(51) Int. Cl.: B23B 47/28

(54) **Vorrichtung zum Herstellen von mittigen Bohrungen in auf Gehrung geschnittenen Profilstäben**
Device for the generation of centered holes in miter joint profile bars
Dispositif pour la production des trous centrés dans des profilés à joint d'angle à onglet

(30) Priorität: 28.12.2003 DE 10361896
(43) Veröffentlichungstag der Anmeldung: 13.07.2005
(73) Patentinhaber: MiniTec Maschinenbau GmbH & Co. KG, 66914 Waldmohr (DE)
(72) Erfinder: Nau, Gregor, 66904 Brücken (DE); Stegner, Heiko, 66484 Alt-Hornbach (DE)
(74) Vertreter: Klein, Friedrich Jürgen

(56) Entgegenhaltungen:
- DE-U1- 29 904 802
- GB-A- 154 073
- US-A- 5 733 077

## Beschreibung

Die Erfindung betrifft eine Vorrichtung zum Herstellen von mittigen Bohrungen in auf Gehrung geschnittenen Profilstäben, siehe z.B. DE 299 04 802.

Zum Verbinden von auf Gehrung geschnittenen Profilstäben werden häufig sogenannte Gehrungsverbinder benutzt, die im wesentlichen von zwei gelenkig miteinander verbundenen Zapfen gebildet werden. Die Zapfen der Gehrungsverbinder werden jeweils in eine zentrale Öffnung der miteinander zu verbindenden Profilstäbe eingelegt und mit Hilfe einer Gleitmutter sowie eines Gewindestiftes innerhalb des jeweiligen Profilstabes befestigt. Hierzu muß in jeden der miteinander zu verbindenden Profilstäbe eine mittige Befestigungsbohrung eingebracht werden.

Obwohl der Gehrungswinkel beim rechtwinkligen Verbinden zweier Profilstäbe unterschiedlich sein und in einem Bereich von ca "0 bis 90 Grad liegen kann, werden hierfür einheitliche Gehrungsverbinder benutzt, d.h. der Abstand zwischen der Schwenkachse der Zapfen und der Mitte der jeweiligen Befestigungsbohrung ist unabhängig vom jeweiligen Gehrungswinkel konstant. Dementsprechend verändert sich der Abstand der Mitte der Befestigungsbohrung zur Spitze des auf Gehrung geschnittenen Profilstabes mit der Veränderung des Gehrungswinkels.

Dies macht es erforderlich, den sich für den jeweiligen Gehrungswinkel ergebenden Abstand zwischen der Mitte der herzustellenden Befestigungsbohrung und der Spitze des auf Gehrung geschnittenen Profilstabes jeweils zu berechnen und die Lage der Bohrungsmitte zu kennzeichnen, was üblicher Weise durch sogenanntes Anreißen erfolgt. Diese Vorgehensweise ist einerseits sehr umständlich und führt andererseits im Hinblick darauf, daß die Befestigungsbohrung meist in den Grund der jeweiligen Profilnut eingearbeitet werden muß, sehr häufig zu Ungenauigkeiten.

Der Erfindung liegt daher die Aufgabe zugrunde, eine Vorrichtung zum Herstellen von mittigen Bohrungen in auf Gehrung geschnittenen Profilstäben zu schaffen, die es ermöglicht, auf das Ermitteln des Abstandes zwischen der Mitte der herzustellenden Befestigungsbohrung und der Spitze des auf Gehrung geschnittenen Profilstabes zu verzichten, dennoch aber Gewähr bietet, daß die Befestigungsbohrung unabhängig vom jeweiligen Gehrungswinkel stets im richtigen Abstand zur Spitze bzw zur Gehrungsfläche des auf Gehrung geschnittenen Profilstabes eingebracht wird.

Diese Aufgabe wird erfindungsgemäß durch die kennzeichnenden Merkmale des Patentanspruches 1 gelöst:

Dabei ist zur Lösung dieser Aufgabe davon ausgegangen, daß sich bei unterschiedlichen Gehrungswinkeln zwar der Abstand zwischen der Spitze des auf Gehrung geschnittenen Profilstabes und einem Festpunkt desselben, nämlich der Lage der Mitte einer in den Profilstab einzubringenden Bohrung ändert, daß aber im Schnittbereich der Gehrungsfläche mit der Längsmittelebene des Profilstabes die Entfernung zwischen der Gehrungsfläche und der Bohrung unabhängig vom jeweiligen Gehrungswinkel konstant ist.

Eine in konstruktiver Hinsicht einfache Lösung, die gleichzeitig einen relativ hohen Genauigkeitsgrad aufweist, ergibt sich dadurch, daß der Anschlag von einer vom Träger aufgenommenen Hülse gebildet ist, die koaxial zum Positionierdorn angeordnet und im Bereich ihres freien Endes zur Bildung einer Anschlagfläche keilförmig ausgebildet ist.

Eine zweite Ausführungsform für den Anschlag, die insbesondere für Profilstäbe mit relativ großen Hohlräumen vorteilhaft ist, läßt sich dann erreichen, wenn der Anschlag von einem an einer Unterseite des Trägers angeordneten Winkelstück gebildet ist, das um eine zur Achse der Bohrbuchse parallel gerichtete Achse frei schwenkbar ist, die innerhalb der Längsmittelebene des Positionierdornes liegt.

Eine dritte Ausführungsform für den Anschlag läßt sich dadurch erreichen, daß dieser von einem am Träger ausgebildeten Halbzylinder gebildet ist, dessen Achse innerhalb der Längsmittelebene des Positionierdornes parallel zur Achse der Bohrbuchse gerichtet ist. Diese Lösung geht davon aus, daß bei sich veränderndem Gehrungswinkel zwar der jeweilige Anlagepunkt bzw die jeweilige Berührungsgerade zwischen dem Halbzylinder und der Gehrungsfläche verlagert, dabei aber die Relativlage des Schnittpunktes bzw der Schnittgeraden zwischen der Gehrungsfläche und der Längsmittelebene des Positionierdornes zur Achse der Bohrbuchse 7 konstant bleibt.

Eine vierte Ausführungsform der Erfindung ergibt sich dann, wenn der Anschlag von einem am Träger ausgebildeten Keil gebildet ist, dessen stirnseitige Begrenzung innerhalb der Längsmittelebene des Positionierdornes und parallel zur Achse der Bohrbuchse verläuft.

Um die erfindungsgemäße Vorrichtung am jeweiligen Profilstab befestigen zu können, ist der Träger mittels einer Klemmeinrichtung auf den Profilstab aufklemmbar.

Sofern hierbei die Klemmeinrichtung von einer in den Träger einschraubbaren Klemmschraube gebildet ist, ergibt sich für die Ausbildung und Aufnahme der Bohrbuchse im Träger dann eine höchst einfache Lösung, wenn die Klemmschraube gleichzeitig als Bohrbuchse ausgebildet ist.

Weitere Einzelheiten und Vorteile der erfindungsgemäßen Lösung ergeben sich aus der nachfolgenden Beschreibung von in der beigefügten Zeichnung dargestellten Ausführungsbeispielen derselben.

Es zeigt:
- **Fig. 1:**: eine schaubildliche Darstellung einer ersten Ausführungsform der Erfindung;
- **Fig. 2**:: eine schaubildliche Darstellung einer zweiten Ausführungsform der Erfindung;
- **Fig. 3:**: eine schaubildliche Darstellung der ersten Ausführungsform vor dem Einführen des Positionierdornes in einen Profilstab;
- **Fig. 4:**: eine schaubildliche Darstellung der ersten Ausführungsform nach dem Einführen des Positionierdornes in den Profilstab;
- **Fig. 5**:: eine schaubildliche Darstellung der zweiten Ausführungsform vor dem Einführen des Positionierdornes in einen Profilstab;
- **Fig. 6**:: eine schaubildliche Darstellung der zweiten Ausführungsform nach dem Einführen des Positionierdornes in den Profilstab;
- **Fig. 7**:: eine schaubildliche Darstellung einer dritten Ausführungsform der Erfindung;
- **Fig. 8**:: eine schaubildliche Darstellung einer vierten Ausführungsform der Erfindung;

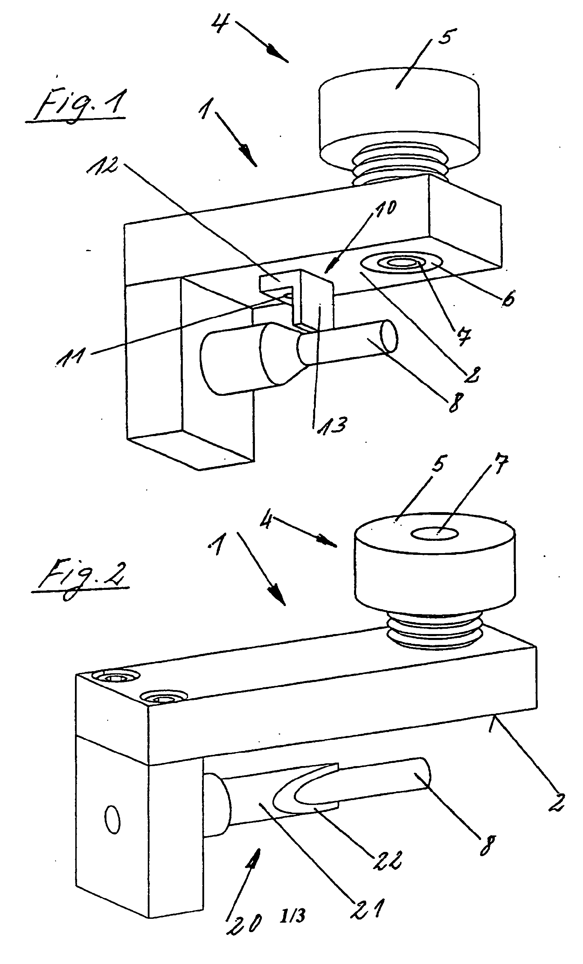

In Fig.1 ist ein Träger 1 gezeigt, der zur Aufnahme einer Klemmeinrichtung 4 dient, die eine mit einem Gewinde versehene Klemmschraube 5 aufweist und in den Träger 1 eingeschraubt ist. An ihrem aus dem Träger 1 herausragenden Ende ist die Klemmschraube 5 mit einer Druckfläche 6 versehen. Ferner weist die Klemmschraube 5 eine zu ihrer Längsrichtung parallel gerichtete Bohrung auf, die als Bohrlehre bzw Bohrbuchse 7 dient.

Der Träger 1 dient ferner zur Aufnahme eines Positionierdornes 8. Das -bezogen auf Fig. 1- linke Ende des Positionierdornes 8 ist hierzu im Träger 1 derart befestigt, daß der Positionierdorn 8 parallel zur einer Unterseite 2 des Trägers 1 verläuft. Die Anordnung bzw Zuordnung des Positionierdornes 8 und der Bohrbuchse 7 ist so getroffen, daß deren Achse und die Längsmittelebene des Positionierdornes 8 in einer senkrechten Ebene liegen.
An der Unterseite des Trägers 1 ist ein als Winkelstück ausgebildeter Anschlag 10 angeordnet, der um eine nicht näher dargestellte Zapfenschraube 11 frei schwenkbar ist. Die Anordnung der Zapfenschraube 11 ist dabei so getroffen, daß ihre Achse innerhalb der Längsmittelebene des Positionierdornes 8 im wesentlichen parallel zur Achse der Bohrbuchse 7 verläuft. Der Anschlag 10 weist zwei Schenkel 12, 13 auf, wovon der Schenkel 12 die Zapfenschraube 11 trägt und mit dem Träger 1 verbunden ist, während der Schenkel 13 als eigentliche Anschlagfläche dient und beim Einschieben des Positionierdornes 8 in die Öffnung 14 eines Profilstabes 15 die Einschubtiefe des Positionierdornes 8 in den Profilstab 15 begrenzt und hierbei eine zur Gehrungsfläche im wesentlichen parallele Lage einnimmt.
Aufgrund der vorbeschriebenen Anordnung liegt die Anschlagfläche des als Anschlag 10 dienenden Schenkels 13 im Bereich der Längsmittelebene des Positionierdornes 8 an der Gehrungsfläche des Profilstabes 15 an. Da dies der Punkt bzw der Bereich der Gehrungsfläche ist, deren Abstand zur Achse der Bohrbuchse 7 bei sich änderndem Gehrungswinkel konstant bleibt, ist auch der Abstand der Gehrungsfläche zur Bohrbuchse 7 unabhängig vom Gehrungswinkel konstant.
Die erfindungsgemäße Vorrichtung kann daher bei Verwendung einheitlicher Gelenkverbinder aufgrund des konstanten Abstandes zwischen der Mitte der Gehrungsfläche zur Mitte der Bohrbuchse 7 unabhängig vom jeweiligen Gehrungswinkel für praktisch alle vorkommenden Gehrungswinkel ohne Veränderung des Abstandes zwischen dem Anschlag 10 und der Achse der Bohrbuchse 7 verwendet werden.

In Fig. 2 ist eine zweite Ausführungsform der Erfindung dargestellt, die sich von der in Fig. 1 dargestellten ersten Ausführungsform nur durch die Ausbildung und Anordnung des Anschlages unterscheidet. Aus diesem Grund sind in Fig. 2 für die mit der ersten Ausführungsform übereinstimmenden Teile die gleichen Bezugszahlen wie in Fig. 1 verwendet.

Auch bei der in Fig. 2 dargestellten zweiten Ausführungsform dient die Klemmschraube 5 gleichzeitig als Bohrbuchse 7. Ebenso ist der Positionierdorn 8 am Träger 1 befestigt und ist parallel zur Unterseite 2 des Trägers 1 gerichtet. Auch entspricht die lagemäßige Zuordnung des Positionierdornes 8 zur Bohrbuchse 7 deren Zuordnung bei der ersten Ausführungsform.
Bei der Ausführungsform gemäß Fig. 2 ist der die Einschubtiefe des Positionierdornes 8 in die Öffnung 14 eines Profilstabes 15 begrenzende Anschlag 20 von einer Hülse 21 gebildet, die vom Träger 1 aufgenommen und koaxial zum Positionierdorn 8 angeordnet ist. Die Hülse 21 ist im Bereich ihres vorderen Endes beidseitig mit einer Abflachung 22 versehen, sodaß ihre eigentliche Anschlagfläche von zwei segmentartigen Kreisringflächen gebildet wird.

In einer bevorzugten Ausgestaltung der zweiten Ausführungsform der erfindungsgemäßen Vorrichtung kann die Hülse 21 auf dem Positionierdorn 8 dreh- und gegebenenfalls feststellbar angeordnet sein, um hierdurch dann, wenn der Profilstab 15 zusätzlich zur mittig angeordneten Öffnung 14 weitere Öffnungen aufweist, eine Gegenlage an der Gehrungsfläche des Profilstabes 15 zu haben.

Bei beiden Ausführungsformen kann es dann, wenn aufgrund der Breite der Profilstäbe 15 größenmäßig unterschiedliche Gelenkverbinder, d.h. solche mit unterschiedlichen Abständen zwischen der Schwenkachse der Zapfen und der Mitte der jeweiligen Befestigungsbohrung verwendet werden müssen, vorteilhaft sein, den Abstand zwischen der jeweiligen Anschlagfläche des Anschlages 10 bzw des Anschlages 20 und der Bohrbuchse 7 verändern zu können.
Dies kann bei der Ausführungsform gemäß Fig. 1 dadurch realisiert werden, daß der Anschlag 10 am Träger 1 verschieblich und feststellbar angeordnet wird. Bei der Ausführungsform gemäß Fig. 2 kann der Anschlag 20 entlang des Positionierdornes 8 verschieblich und feststellbar angeordnet werden.

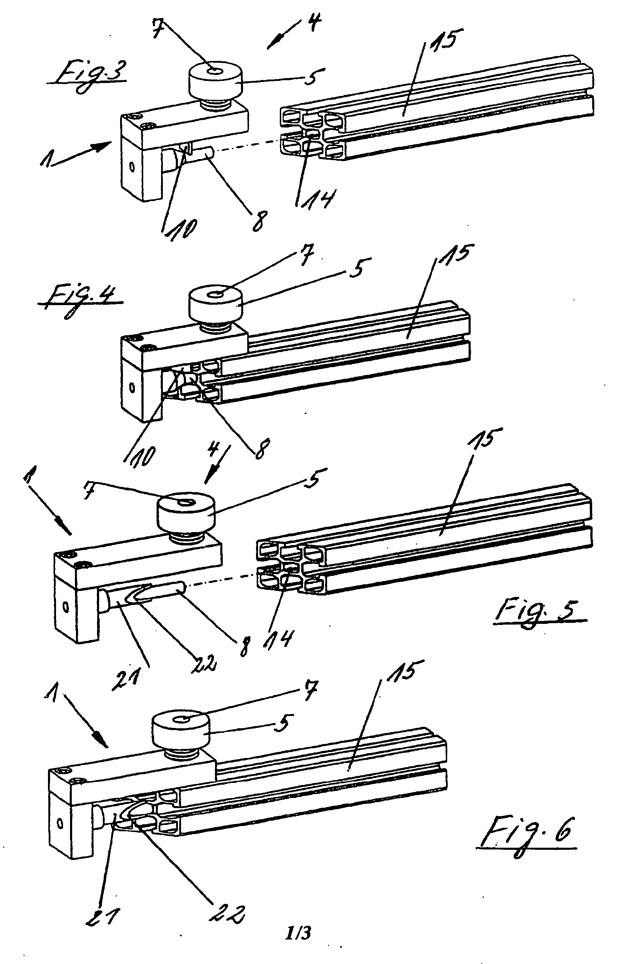

In den Fig. 3 bis 6 ist für beide Ausführungsformen die jeweilige Relativlage der erfindungsgemäßen Vorrichtung zum jeweiligen Profilstab 15 vor und nach dem Einführen des Positionierdornes 8 in die mittige Öffnung 14 des Profilstabes 15 gezeigt. Sofern der Durchmesser der im Profilstab 15 ohnehin vorhandenen mittigen Öffnung 14 nicht dem Durchmesser des Positionierdornes 8 entspricht, kann es erforderlich sein, die Öffnung 14 auf einer der Einschubtiefe des Positionierdornes 8 entsprechenden Länge auf den Durchmesser des Positionierdornes 8 aufzubohren. Sofern der Positionierdorn 8 spielfrei in die Öffnung 14 des Profilstabes 15 eingeschoben wird, wird mit der erfindungsgemäßen Vorrichtung gleichzeitig sichergestelit, daß die in den Profilstab 15 einzubringende Bohrung nicht nur den richtigen Abstand zur Gehrungsfläche des Profilstabes 15 aufweist, sie vielmehr auch in Bezug auf die Breite des Profilstabes 15 mittig positioniert ist.

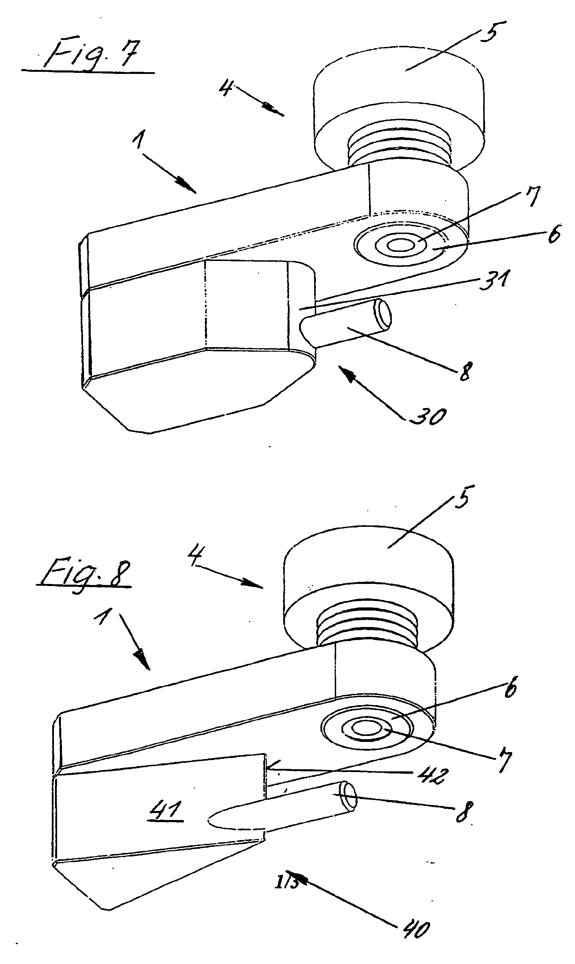

In den Fig. 7 und 8 sind zwei weitere Ausführungsformen der Erfindung gezeigt, deren Grundaufbau ebenfalls dem Aufbau der beiden ersten Ausführungsformen entspricht.

Auch bei den in den Fig. 7 und 8 dargestellten dritten und vierten Ausführungsformen dient die Klemmschraube 5 gleichzeitig als Bohrbuchse 7. Ebenso ist der Positionierdorn 8 am Träger 1 befestigt und ist parallel zur Unterseite 2 des Trägers 1 gerichtet. Auch entspricht die lagenmäßige Zuordnung des Positionierdornes 8 zur Bohrbuchse 7 deren Zuordnung bei der ersten und zweiten Ausführungsform. Daher sind in den beiden Figuren diejenigen Teile der Vorrichtung die den Teilen der beiden ersten Ausführungsformen entsprechen, mit den gleichen Bezugszahlen wie in den Fig. 1 und 2 versehen.

Bei der dritten Ausführungsform ist deren Anschlag 30 von einem Halbzylinder 31 gebildet, der unmittelbar am Träger 1 angeordnet, bzw an diesem ausgebildet ist. Die Anordnung ist dabei so getroffen, daß die Achse des Halbzylinders 31 innerhalb der Längsmittelebene des Positionierdornes 8 verläuft und parallel zur Achse der Bohrbuchse 7 gerichtet ist. Damit liegt zwar der Halbzylinder 31 bei unterschiedlichen Gehrungswinkeln an unterschiedlichen Punkten bzw unterschiedlichen Berührungsgeraden an der jeweiligen Gehrungsfläche an, wodurch sich zwar der jeweilige Abstand zwischen den jeweiligen Anlagepunkten bzw den Berührungsgeraden verändert, jedoch bleibt hierbei der Abstand zwischen dem Schnittpunkt bzw der Schnittgeraden der Gehrungsfläche mit der Längsmittelebene des Positionierdornes 8 einerseits und der Achse der Bohrbuchse 7 andererseits konstant.

Bei der vierten Ausführungsform der Erfindung ist deren Anschlag 40 von einem Keil 41 gebildet, der ebenfalls unmittelbar am Träger 1 angeordnet, bzw an diesem ausgebildet ist. Auch hier ist die Anordnung so getroffen, daß die Längsachse des Keiles 41 innerhalb der Längsmittelebene des Positionierdornes 8 angeordnet ist, wobei seine stirnseitige Begrenzung 42 parallel zur Achse der Bohrbuchse 7 gerichtet ist.

## Patentansprüche

1. Vorrichtung zum Herstellen von mittigen Bohrungen in auf Gehrung geschnittenen Profilstäben mit einem Anschlag (10, 20, 30, 40), der mit der Gehrungsfläche des Profilstabes in Anlage bringbar ist, **gekennzeichnet durch** einen Träger (1) zur Aufnahme sowohl einer Bohrbuchse (7), als auch eines in eine in Längsrichtung des Profilstabes (15) verlaufende Öffnung (14) einführbaren Positionierdornes (8), wobei der Positionierdorn (8) und die Bohrbuchse (7) am Träger (1) derart angeordnet sind, daß die Achse der Bohrbuchse (7) und die trängsmittelebene des Positionierdornes (8) in einer im wesentlichen senkrechten Ebene liegen, und **durch** den zur Begrenzung der Einschubtiefe des Positionierdomes (8) in den Profilstab (15) dienenden Anschlag (10, 20, 30, 40), dessen Anschlagfläche an der Gehrungsfläche des Profilstabes (15) derart in Anlage bringbar ist, daß der Abstand zwischen dem Schnittpunkt bzw der Schnittgeraden der Gehrungsfläche und der Längsmittelebene des Positionierdornes einerseits und der Achse der Bohrbuchse 7 andererseits konstant ist.

2. Vorrichtung nach Anspruch 1, **dadurch gekennzeichnet, daß** der Anschlag (20) von einer vom Träger (1) aufgenommenen Hülse (21) gebildet ist, die koaxial zum Positionierdorn (8) angeordnet und im Bereich ihres freien Endes zur Bildung einer Anschlagfläche keilförmig ausgebildet ist.

3. Vorrichtung nach Anspruch 1, **dadurch gekennzeichnet, daß** der Anschlag (10) von einem an einer Unterseite (2) des Trägers (1) angeordneten Winkelstück gebildet ist, das um eine zur Achse der Bohrbuchse (7) parallel gerichtete Achse frei schwenkbar ist, die innerhalb der Längsmittelebene des Positionierdornes (8) liegt.

4. Vorrichtung nach Anspruch 1, **dadurch gekennzeichnet, daß** der Anschlag (30) von einem am Träger (1) ausgebildeten Halbzylinder (31) gebildet ist, dessen Achse innerhalb der Längsmittelebene des Positionierdornes (8) angeordnet und parallel zur Achse der Bohrbuchse (7) gerichtet ist.

5. Vorrichtung nach Anspruch 1, **dadurch gekennzeichnet, daß** der Anschlag (40) von einem am Träger (1) ausgebildeten Keil (41) gebildet ist, dessen stirnseitige Begrenzung (42) innerhalb der Längsmittelebene des Positionierdornes (8) und parallel zur Achse der Bohrbuchse (7) verläuft.

6. Vorrichtung nach einem oder mehreren der Ansprüche 1 bis 3, **dadurch gekennzeichnet, daß**
der Abstand zwischen der Bohrbuchse (7) und dem Anschlag (10 bzw 20) einstellbar ist.

7. Vorrichtung nach einem oder mehreren der Ansprüche 1 bis 5, **dadurch gekennzeichnet, daß**
der Träger (1) mittels einer Klemmeinrichtung (4) auf den Profilstab (15) aufklemmbar ist.

8. Vorrichtung nach Anspruch 7, **dadurch gekennzeichnet, daß** die Klemmeinrichtung (4) von einer in den Träger (1) einschraubbaren Klemmschraube (5) gebildet ist.

9. Vorrichtung nach Anspruch 8, **dadurch gekennzeichnet, daß** die Klemmschraube (5) als Bohrbuchse (7) ausgebildet ist.

## Claims

1. Apparatus for producing central drilled holes in mitre-cut profiled rods, having a stop (10, 20, 30, 40) which can be brought into abutment against the mitred surface of the profiled rod, **characterized by** a carrier (1) for holding both a drill bush (7) and also a positioning mandrel (8) which is insertable into an opening (14) that extends in the longitudinal direction of the profiled rod (15), wherein the positioning mandrel (8) and the drill bush (7) are arranged on the carrier (1) such that the axis of the drill bush (7) and the longitudinal centre plane of the positioning mandrel (8) lie in a substantially perpendicular plane, and by the stop (10, 20, 30, 40), which serves to limit the insertion depth of the positioning mandrel (8) into the profiled rod (15) and the stop surface of which can be brought into abutment against the mitred surface of the profiled rod (15) such that the distance between the point or line of intersection of the mitred surface and the longitudinal centre plane of the positioning mandrel, on one side, and the axis of the drill bush 7, on the other side, is constant.

2. Apparatus according to Claim 1, **characterized in that** the stop (20) is formed by a sleeve (21) which is held on the carrier (1), is arranged coaxially with the positioning mandrel (8) and is formed in a wedge-like manner in the region of its free end in order to form a stop surface.

3. Apparatus according to Claim 1, **characterized in that** the stop (10) is formed by an angle piece which is arranged on the underside (2) of the carrier (1) and is freely pivotable about an axis which is directed parallel to the axis of the drill bush (7) and lies within the longitudinal centre plane of the positioning mandrel (8).

4. Apparatus according to Claim 1, **characterized in that** the stop (30) is formed by a half cylinder (31) which is formed on the carrier (1) and the axis of which is arranged within the longitudinal centre plane of the positioning mandrel (8) and directed parallel to the axis of the drill bush (7).

5. Apparatus according to Claim 1, **characterized in that** the stop (40) is formed by a wedge (41) which is formed on the carrier (1) and the end-side boundary (42) of which extends within the longitudinal centre plane of the positioning mandrel (8) and parallel to the axis of the drill bush (7).

6. Apparatus according to one or more of Claims 1 to 3, **characterized in that** the distance between the drill bush (7) and the stop (10 or 20) is settable.

7. Apparatus according to one or more of Claims 1 to 5, **characterized in that** the carrier (1) is clampable onto the profiled rod (15) by means of a clamping device (4).

8. Apparatus according to Claim 7, **characterized in that** the clamping device (4) is formed by a clamping screw (5) that is screwable into the carrier (1).

9. Apparatus according to Claim 8, **characterized in that** the clamping screw (5) is in the form of a drill bush (7).

## Revendications

1. Dispositif pour la production de trous centrés dans des barres profilées coupées en onglet, comprenant une butée (10, 20, 30, 40) qui peut être amenée en appui contre la face en onglet de la barre profilée, **caractérisé par**
un support (1) pour recevoir non seulement un canon de perçage (7) mais encore un mandrin de positionnement (8) pouvant être introduit dans une ouverture (14) s'étendant dans la direction longitudinale de la barre profilée (15), le mandrin de positionnement (8) et le canon de perçage (7) étant disposés sur le support (1) de telle sorte que l'axe du canon de perçage (7) et le plan médian longitudinal du mandrin de positionnement (8) se situent dans un plan essentiellement vertical, et **caractérisé par** la butée (10, 20, 30, 40) qui sert à limiter la profondeur d'insertion du mandrin de positionnement (8) dans la barre profilée (15), et dont la surface de butée peut être amenée en appui contre la face en onglet de la barre profilée (15), de telle sorte que la distance entre le point d'intersection ou les lignes d'intersection de la face en onglet et du plan médian longitudinal du mandrin de positionnement d'une part, et l'axe du canon de perçage (7) d'autre part, soit constante.

2. Dispositif selon la revendication 1, **caractérisé en ce que** la butée (20) est formée par une douille (21) reçue par le support (1), laquelle douille est disposée de manière coaxiale au mandrin de positionnement (8) et est réalisée en forme de coin dans la région de son extrémité libre pour former une surface de butée.

3. Dispositif selon la revendication 1, **caractérisé en ce que** la butée (10) est formée par une équerre disposée sur un côté inférieur (2) du support (1), laquelle équerre peut pivoter librement autour d'un axe qui est orienté parallèlement à l'axe du canon de perçage (7) et qui se situe à l'intérieur du plan médian longitudinal du mandrin de positionnement (8).

4. Dispositif selon la revendication 1, **caractérisé en ce que** la butée (30) est formée par un demi-cylindre (31) qui est réalisé sur le support (1) et dont l'axe est disposé à l'intérieur du plan médian longitudinal du mandrin de positionnement (8) et est orienté parallèlement à l'axe du canon de perçage (7).

5. Dispositif selon la revendication 1, **caractérisé en ce que** la butée (40) est formée par un coin (41) qui est réalisé sur le support (1) et dont la limitation frontale (42) s'étend à l'intérieur du plan médian longitudinal du mandrin de positionnement (8) et parallèlement à l'axe du canon de perçage (7).

6. Dispositif selon l'une quelconque ou plusieurs des revendications 1 à 3, **caractérisé en ce que** la distance entre le canon de perçage (7) et la butée (10 ou 20) est réglable.

7. Dispositif selon l'une quelconque ou plusieurs des revendications 1 à 5, **caractérisé en ce que** le support (1) peut être serré sur la barre profilée (15) au moyen d'un dispositif de serrage (4).

8. Dispositif selon la revendication 7, **caractérisé en ce que** le dispositif de serrage (4) est formé par une vis de serrage (5) pouvant être vissée dans le support (1).

9. Dispositif selon la revendication 8, **caractérisé en ce que** la vis de serrage (5) est réalisée en tant que canon de perçage (7).
